(19) Europäisches Patentamt / European Patent Office / Office européen des brevets

(11) **EP 2 828 694 B1**

(12) **FASCICULE DE BREVET EUROPEEN**

(45) Date de publication et mention de la délivrance du brevet:
**22.11.2017 Bulletin 2017/47**

(51) Int Cl.:
**G02B 6/00** *(2006.01)*    **G02B 6/32** *(2006.01)*
**F21V 8/00** *(2006.01)*

(21) Numéro de dépôt: **13711015.1**

(22) Date de dépôt: **18.03.2013**

(86) Numéro de dépôt international:
**PCT/EP2013/055513**

(87) Numéro de publication internationale:
**WO 2013/139721 (26.09.2013 Gazette 2013/39)**

(54) **SYSTEME D'INJECTION DE LUMIERE DANS UN GUIDE D'ONDE, DISPOSITIF DE GUIDAGE D'ONDE ET ENSEMBLE D'INJECTION DE LUMIERE DANS UN GUIDE D'ONDE**

SYSTEM ZUM EINKOPPELN VON LICHT IN EINEN WELLENLEITER, WELLENLEITERVORRICHTUNG UND ANORDNUNG ZUM EINKOPPELN VON LICHT IN EINEN WELLENLEITER

SYSTEM FOR INJECTING LIGHT INTO A WAVEGUIDE, WAVEGUIDE DEVICE AND ASSEMBLY FOR INJECTING LIGHT INTO A WAVEGUIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2012 FR 1252525**

(43) Date de publication de la demande:
**28.01.2015 Bulletin 2015/05**

(73) Titulaire: **Commissariat à l'Énergie Atomique et aux Énergies Alternatives 75015 Paris (FR)**

(72) Inventeurs:
• **LE BLEVENNEC, Gilles**
  **F-38190 Bernin (FR)**
• **BERNE, Philippe**
  **F-38000 Grenoble (FR)**

(74) Mandataire: **Brevalex**
  **95, rue d'Amsterdam**
  **75378 Paris Cedex 8 (FR)**

(56) Documents cités:
**JP-A- 2000 249 837    US-A1- 2004 218 858**
**US-A1- 2010 048 085**

**Description**

**DOMAINE TECHNIQUE**

L'invention se rapporte au domaine du guidage de lumière dans des guides d'onde et à l'injection de lumière dans de tels guides d'onde.

De nombreuses industries font appel à des systèmes d'éclairage qui doivent être déportés, on peut ainsi citer entre autres l'industrie de l'électronique grand public avec les écrans qu'ils soient télévisuels ou informatiques, l'industrie du mobilier avec certains mobiliers qui peuvent intégrer des dispositifs lumineux ou encore l'industrie des luminaires et des éclairages intérieurs.

Une problématique récurrente à laquelle sont confrontées ces industries est l'intégration des guides d'onde permettant la déportation des systèmes d'éclairage sans que ces guides d'onde n'impactent significativement l'aspect esthétique des dispositifs qui en sont équipés. Pour répondre à cette problématique les guides d'onde ont vu, ces dernières années, certaines de leurs dimensions significativement réduites pour en diminuer le volume occupé. Ainsi il n'est pas rare, par exemple, que les écrans informatiques soient équipés de films minces, faisant office de guides d'onde pour un rétro-éclairage de l'écran à base de diodes électroluminescentes déportées sur les bords de l'écran dont l'épaisseur est de l'ordre de quelques millimètres.

En raison de la diminution en taille des guides d'onde, l'injection de lumière dans ces guides d'onde, même avec des sources lumineuses de taille réduite, telles que des diodes électroluminescentes, est devenue problématique et nécessite l'utilisation de systèmes d'injection de lumière adaptés.

L'invention concerne plus particulièrement un système d'injection de lumière dans un guide d'onde, un dispositif de guidage d'onde et un ensemble d'injection de lumière dans un guide d'onde.

**ÉTAT DE LA TECHNIQUE ANTÉRIEURE**

L'injection de lumière dans des guides d'onde, dont au moins une dimension est réduite pour faciliter l'intégration desdits guides d'onde, reste problématique.

En effet, certains guides d'onde, comme certains films minces transparents ou certaines fibres optiques, présentent au moins une dimension qui est de l'ordre de quelques millimètres et l'injection, qui doit avoir lieu à une extrémité dudit guide d'onde qui présente cette dimension, entraîne généralement une forte déperdition de lumière. Ainsi, par exemple, l'injection directe sur la tranche d'un film mince de 5 mm d'épaisseur avec une diode simple peut occasionner plus de 50% de perte de lumière lors de l'injection.

Pour remédier à cet inconvénient il est connu du document US 2006/0062016, d'équiper le guide d'onde d'un système d'injection de lumière. Un tel système d'injection peut prendre la forme d'une excroissance de l'extrémité du guide d'onde permettant à ce dernier de présenter une zone de réception du rayonnement électromagnétique dont la surface est plus importante que celle d'un guide d'onde qui n'en est pas équipé. Ce même système d'injection présente en outre des moyens de focalisation du rayonnement électromagnétique adaptés pour focaliser par réflexion le rayonnement électromagnétique réceptionné par la zone de réception en direction du guide d'onde.

Ainsi, le guide d'onde, en présentant une surface de réception plus importante et dont la taille est adaptée aux dimensions de la source lumineuse destinée à fournir le rayonnement électromagnétique à injecter dans le guide d'onde, peut recevoir la majeure partie du rayonnement électromagnétique tout en présentant sur la presque totalité du guide d'onde au moins une dimension réduite.

Néanmoins un guide d'onde ainsi équipé présente des inconvénients majeurs. En effet, si la réception de la lumière est obtenue au moyen d'une surface de réception de taille adaptée, la focalisation du rayonnement électromagnétique est obtenue aux moyens de réflexions multiples qui peuvent occasionner pour chaque réflexion une perte d'intensité du rayonnement électromagnétique. De plus l'excroissance est disposée à une extrémité du guide d'onde et n'autorise donc une injection de lumière qu'au niveau de l'extrémité qu'elle équipe. Ainsi, il n'est pas possible avec un tel système d'injection d'injecter de la lumière dans le guide d'onde à un autre emplacement que celui de l'une des extrémités du guide d'onde.

**EXPOSÉ DE L'INVENTION**

La présente invention vise à remédier à ces inconvénients.

L'invention à donc pour but de fournir un système d'injection de lumière dans un guide d'onde, le système d'injection étant adapté pour injecter un rayonnement électromagnétique selon une direction d'injection dans un guide d'onde dont au moins une dimension est faible vis-à-vis des dimensions de la source lumineuse, le système d'injection ne présentant pas de pertes de lumière liées à un phénomène de réflexion.

Un autre but de l'invention est de permettre une injection de lumière efficace dans un guide d'onde dont au moins une dimension est faible vis-à-vis des dimensions de la source lumineuse, ceci à des emplacements du guide d'onde autres qu'au niveau de ses extrémités.

A cet effet l'invention se rapporte à un système d'injection de lumière dans un guide d'onde conformément à la revendication 1. Un tel système d'injection permet, lorsqu'il est en continuité optique avec un guide optique par sa zone d'injection, l'injection d'un rayonnement électromagnétique sensiblement parallèle à la direction d'injection dans le guide d'onde, ceci pour l'ensemble du rayonnement électromagnétique reçu sur la portion de surface de réception. La surface permettant l'injection de lumière dans le guide d'onde ne se limite donc pas à, comme cela est le cas lors de l'injection par l'extrémité du guide d'onde, l'extrémité du guide d'onde. En effet, lorsque le guide d'onde est équipé avec le système d'injection, l'injection de lumière se fait au moyen de la surface fournie par la portion de surface d'injection qui peut être dimensionnée au besoin. Ceci est d'autant plus vrai que dans certaine configuration de l'invention, l'injection de lumière dans le guide d'onde peut être obtenue à la fois aux moyens de l'extrémité du guide d'onde et par la portion de surface de réception.

De plus, le rayonnement électromagnétique injecté au moyen du système d'injection est obtenu avec une perte d'intensité réduite puisque la déviation du rayonnement électromagnétique est obtenue par réfraction sans perte liée à une quelconque réflexion du rayonnement électromagnétique.

De plus, il est possible avec un tel système d'injection, contrairement aux systèmes d'injection de l'art antérieur, d'injecter de la lumière à un autre emplacement du guide d'onde qu'au niveau de l'une de ses extrémités.

L'emplacement peut être une extrémité du guide d'onde ou un autre emplacement le long du guide d'onde.

On entend par « en continuité optique avec le guide d'onde » qu'un rayonnement électromagnétique passant du système d'injection au guide d'onde au niveau de la zone d'injection n'est pas soumis lors de ce passage à une rupture d'indice optique abrupte qui pourrait engendrer une déviation importante de la direction de propagation dudit rayonnement optique. Une telle continuité optique peut être obtenue, dans le cas ou le système d'injection présente, au niveau de sa zone d'interface, un indice optique sensiblement identique à celui du guide optique, par exemple au moyen :

- d'une colle faisant interface entre le guide d'onde et le système d'injection, ladite colle présentant un indice optique sensiblement identique à celui du guide optique,
- d'un additif d'interface entre le guide d'onde et le système d'injection, l'additif présentant un indice optique sensiblement identique à celui du guide d'onde,
- d'un ajustement de la surface formant la zone d'injection du système d'injection et de la surface du guide optique destinée à être en contact avec la zone d'injection ceci de manière à supprimer la couche d'air qui pourrait exister lors de l'équipement du guide optique par le système d'injection.

Le guide d'onde dans lequel le système d'injection peut être destiné à injecter un rayonnement électromagnétique est un guide d'onde présentant au moins une dimension réduite c'est-à-dire inférieure à 5 mm, tel que par exemple un film mince carré ou rectangulaire d'épaisseur inférieure à 5 mm ou une fibre optique dont le diamètre est inférieur à 5 mm.

On entend ci-dessus et dans le reste de ce document par sensiblement parallèle à une direction que la déviation angulaire par rapport à cette direction est inférieure à 5° et préférentiellement inférieure à 2°.

La zone d'injection peut présenter une dimension faible vis-à-vis de la portion de surface de réception.

On entend par dimension faible vis-à-vis de la portion de surface de réception, que les dimensions de la zone d'injection sont inférieures à au moins trois fois la dimension minimum de la zone d'injection ceci de manière à présenter une zone d'injection dont les dimensions sont adaptées pour être inférieures à la surface de réception du guide d'onde sur lequel le système d'injection est destiné à être installé.

La zone d'injection peut être, au moins dans deux directions, sensiblement sans dimension, la zone d'injection pouvant, par exemple, prendre la forme d'une portion de surface longiligne de largeur sensiblement nulle.

Ainsi il est possible de parfaitement définir la zone par laquelle est introduit le rayonnement électromagnétique et de contrôler son injection dans le guide d'onde.

Le système d'injection étant destiné à injecter un rayonnement électromagnétique dans le guide d'onde au niveau d'un emplacement dudit guide d'onde présentant au moins une direction principale de guidage, la direction d'injection peut être sensiblement parallèle à la direction principale de guidage.

Une telle direction d'injection permet, lorsque le système d'injection équipe le guide d'onde, d'injecter le rayonnement électromagnétique au moyen d'une source lumineuse dont la direction d'émission est sensiblement selon la direction principale de guidage du guide d'onde.

On entend par direction principale au niveau de l'extrémité du guide d'onde, la direction moyenne selon laquelle un rayonnement électromagnétique se propage lorsqu'il est injecté au niveau de ladite extrémité dans le guide d'onde. Ainsi par exemple, pour un guide d'onde prenant la forme d'une fibre optique, la direction principale de guidage est la direction longitudinale de la fibre optique et pour un guide d'onde prenant la forme d'un film mince de forme rectangulaire, la direction principale de guidage au niveau d'une extrémité, c'est-à-dire d'un côté, du film est la direction perpendiculaire audit côté et qui est dans le plan du film. Dans le cas d'un film dans lequel l'injection de lumière est réalisée à un emplacement autre que l'une des extrémités du film, les directions principales de guidage sont l'ensemble des directions de guidage du film, c'est-à-dire, pour un film plan, l'ensemble des directions comprises dans le plan du film.

Le système d'injection peut comporter un corps transparent dont l'indice optique $n_1$ est sensiblement identique à celui du guide d'onde dans lequel le système d'injection est destiné à injecter un rayonnement électromagnétique.

Ainsi le rayonnement électromagnétique, une fois qu'il a traversé la portion de surface de réception et qu'il a été dévié par cette même portion de surface par réfraction, ne subit pas de modification de sa direction et/ou de pertes qui pourraient être liées à un changement d'indice dans le corps lui-même ou au niveau de l'interface entre le corps et le guide d'onde.

Le corps peut présenter la portion de surface de réception, ladite portion de surface de réception présentant en chacun de ses points une courbure de surface telle qu'un rayonnement électromagnétique sensiblement parallèle à la direction d'injection reçu en l'un desdits points de la portion de surface de réception est dévié par réfraction en direction de la zone d'injection.

De telles courbures de surface de la portion de surface de réception permettent d'assurer une redirection de l'ensemble du rayonnement électromagnétique sur la zone d'injection.

Au moins une section de la portion de surface de réception, passant par la zone d'injection et selon la direction principale de guidage, peut présenter une forme en arc d'ellipse.

Chacune des sections de la portion de surface de réception, passant par la zone d'injection et selon la direction principale de guidage, peut présenter une forme en arc d'ellipse.

Une section en arc d'ellipse permet d'assurer que l'ensemble du rayonnement électromagnétique arrivant sur ladite section selon la direction d'injection est redirigé en un même point, ce point pouvant, lorsque le dimensionnement de l'ellipse est adapté pour que le point soit positionné à l'interface système d'injection/guide d'onde, alors faire office de zone d'injection.

Une forme en arc d'ellipse est également connue sous la dénomination de segment d'ellipse et correspond à la forme d'une courbe qui peut être prolongée pour former une ellipse.

Le système d'injection peut être destiné à recevoir le rayonnement électromagnétique sur sa portion de surface de réception à partir d'un milieu présentant un indice optique d'origine $n_0$ et les points de chacune des section de la portion de surface de réception présentant une forme en arc d'ellipse sont sensiblement selon une ellipse dont le centre est un point de la zone d'injection et dont le demi grand axe et le demi petit axe sont respectivement définis par les égalités suivantes : $R_g = \dfrac{A \times n_1}{n_0 + n_1}$ et $R_p = (A - R_g) \times \dfrac{\sqrt{n_1^{\,2} - n_0^{\,2}}}{n_0}$ avec A une dimension caractéristique de l'ellipse qui est adaptée à la largeur du rayonnement qui est destinée à être reçu par la portion de surface de réception.

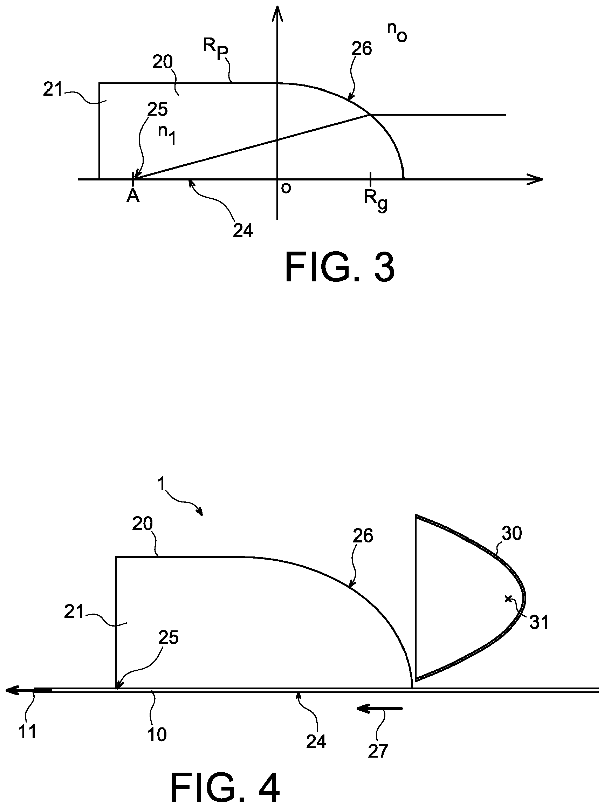

Ainsi, pour une valeur de A donnée, la partie du rayonnement électromagnétique reçue au niveau de l'une des sections de la portion de surface de réception est dirigée en direction d'un même point formant la zone d'injection, ce point étant situé à une distance A du centre de l'ellipse comme cela est illustré sur la figure 3. On a donc l'ensemble du rayonnement électromagnétique reçu par lesdites sections de la portion de surface qui converge au même niveau du guide d'onde.

L'ensemble des sections de la portion de surface de réception en forme d'arc d'ellipse peut présenter une même valeur de A.

On peut noter que la valeur de A conditionne les dimensions du demi petit axe et du demi grand axe et fournit également l'emplacement par rapport au centre de l'ellipse de la zone d'injection sur lequel le rayonnement électromagnétique reçu par ladite section est dévié.

Selon un mode réalisation, le système d'injection peut être un dispositif distinct du guide d'onde, ledit système d'injection étant destiné à être en contact optique avec le guide d'onde par sa zone d'injection.

L'invention concerne également un dispositif de guidage d'onde comportant un guide d'onde et un système d'injection de lumière selon l'invention, ledit système d'injection présentant sa zone d'injection en continuité optique avec le guide d'onde au niveau d'un emplacement dudit guide d'onde.

Un tel dispositif de guidage permet de guider un rayonnement électromagnétique émis par une source lumineuse dans le guide d'onde, le rayonnement électromagnétique étant injecté au moyen du système d'injection. Ainsi, il est possible de déporter la source lumineuse sans que les dimensions du guide d'onde n'aient d'impact esthétique important puisque le guide d'onde peut avoir au moins une de ces dimensions réduite sans influence sur la quantité du rayonnement injectée dans ledit guide d'onde.

L'invention concerne également un dispositif de guidage d'onde comportant un composant dont une première partie forme un guide d'onde et une deuxième partie forme un système d'injection selon l'invention, la première partie et la deuxième partie étant en continuité optique l'une avec l'autre au niveau de la zone de la deuxième partie formant zone d'injection.

Un tel dispositif permet de fournir un dispositif faisant office de guide d'onde qui, sur sa majeure partie peut présenter au moins l'une de ses dimensions réduite sans que cela n'ait d'impact sur l'injection de lumière dans ledit dispositif puisque cette injection de lumière peut être réalisée au niveau de la partie du dispositif formant système d'injection.

L'invention concerne également un ensemble d'injection de lumière dans un guide optique pour injecter un rayonnement électromagnétique dans un guide d'onde au niveau d'un emplacement dudit guide d'onde, l'ensemble d'injection comportant :

- un dispositif optique adapté pour rediriger selon une direction d'émission au moins une partie du rayonnement électromagnétique issue d'une source lumineuse placée en une zone, dite focale, du dispositif optique,
- un système d'injection selon l'invention,

le dispositif optique étant destiné à être positionné par rapport au système d'injection de manière à ce que la direction d'émission soit sensiblement parallèle à la direction d'injection et à ce qu'au moins une partie d'un rayonnement électromagnétique émis à partir de la zone focale soit redirigée par le dispositif optique sur la portion de surface de réception du système d'injection.

Un tel système d'injection permet d'injecter le rayonnement électromagnétique issu d'une source lumineuse, placée sur la zone focale du dispositif optique, dans un guide d'onde optique. En effet, le dispositif optique permet de rediriger la majeure partie du rayonnement électromagnétique issu de la source lumineuse selon la direction principale de guidage en direction du système d'injection. Le rayonnement électromagnétique, ainsi dirigé, est dévié, lorsqu'il est reçu par la portion de la surface de réception, en direction de la zone d'injection pour être injecté dans le guide d'onde.

Le dispositif optique peut être un miroir.

Le miroir peut être un miroir parabolique, la zone focale étant le foyer du miroir parabolique et la direction d'émission étant sensiblement parallèle à l'axe optique du miroir parabolique.

Le miroir parabolique peut être un miroir parabolique à symétrie axiale ou un miroir parabolique à symétrie cylindrique.

## BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :

- la figure 1 illustre une vue en coupe d'un ensemble d'injection selon l'invention comportant un système d'injection et un dispositif optique, ledit ensemble équipant un guide d'onde,
- la figure 2 illustre l'ensemble selon la figure 1 avec une source lumineuse disposée au niveau de la zone foyer du dispositif optique, dix rayons lumineux émis par la source lumineuse étant schématisés,
- la figure 3 illustre les dimensions caractéristiques d'un dispositif optique selon l'invention,
- la figure 4 illustre un système d'injection identique à celui illustré sur la figure 1 équipant un guide d'onde à un autre emplacement que celui de l'une des extrémités du guide d'onde,
- la figure 5 illustre un autre mode de réalisation d'un ensemble optique selon l'invention pour lequel le système d'injection est placé en contact avec l'extrémité du guide d'onde,
- la figure 6 illustre un dispositif de guidage d'onde selon l'invention, ledit dispositif de guidage étant constitué d'une première partie formant guide d'onde et d'une deuxième partie formant système d'injection.

Des parties identiques, similaires ou équivalentes des différentes figures portent les mêmes références numériques de façon à faciliter le passage d'une figure à l'autre.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

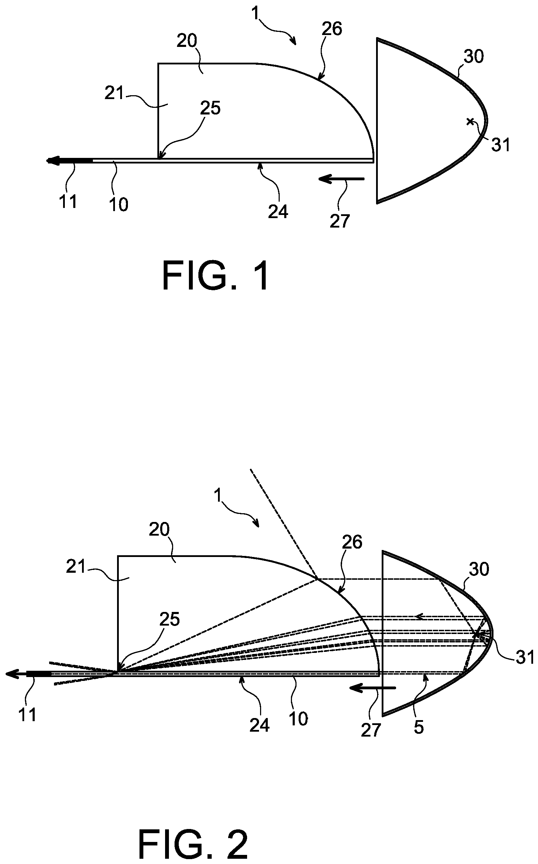

La figure 1 illustre un premier mode de réalisation d'un ensemble d'injection 1 de lumière selon l'invention équipant l'extrémité d'un guide d'onde 10.

L'ensemble d'injection 1 est particulièrement adapté pour l'injection de rayonnement électromagnétique dont la longueur d'onde est comprise dans celle du visible (c'est-à-dire entre 400 et 800 nm) mais peut, sans que l'on sorte du cadre de l'invention, être adapté pour l'injection d'un rayonnement électromagnétique dans des longueurs d'onde dans une autre gamme de longueurs d'onde comme le proche infrarouge, ou le proche ultra-violet ...

Ainsi, toutes les mentions d'indice optique dans ce document s'entendent comme indice optique à la longueur d'onde du rayonnement électromagnétique qui est destiné à être injecté dans le guide d'onde et à y être guidé. Ceci est identique pour le terme transparent qui signifie transparent à la longueur d'onde du rayonnement électromagnétique qui est destiné à être injecté dans le guide d'onde et à y être guidé.

L'ensemble d'injection 1 équipe un guide d'onde 10 réalisé dans un matériau transparent dont l'indice optique est $n_1$. Le guide d'onde 10 illustré sur la figure 1 est un film mince. Le guide d'onde peut être, par exemple, un film mince en plastique transparent, tel qu'en polyméthacrylate de méthyle (plus connu sous son sigle PMMA) dont l'indice optique dans les longueurs d'onde du visible est 1,4935.

Dans un guide d'onde tel qu'illustré sur la figure 1, la direction principale de guidage au niveau d'une extrémité, c'est-à-dire d'un côté, du film est la direction perpendiculaire audit côté et qui est dans le plan du film.

Un tel ensemble d'injection 1 comporte :

- un système d'injection 20 présentant une zone d'injection 25 en continuité optique avec le guide d'onde et une portion de surface de réception 26, le système d'injection présentant une direction d'injection,
- un miroir parabolique 30.

Le système d'injection 20 comporte un corps 21 transparent dont l'indice optique à la longueur d'onde du rayonnement à injecter est sensiblement identique à celui du guide d'onde. Ainsi l'indice optique du système d'injection est $n_1$. Pour un guide d'onde en PMMA, le matériau formant le corps peut être du PMMA ou un autre matériau tel qu'un verre au borosilicate de type BK7.

Le corps 21 du système d'injection 20, dans le mode de réalisation illustré sur la figure 1 dans lequel le guide d'onde est un film mince, est adapté pour équiper la totalité d'un côté du guide d'onde 10. Pour ce faire, le corps 21 du système d'injection 20 présente une forme allongée dans la direction du côté du guide d'onde 10 qu'il équipe. Le corps 21 du système d'injection 20 présente le long de sa longueur une section transversale, telle qu'illustrée sur la figure 1, qui est constante.

Le corps 21 du système d'injection 20 comporte une portion 24 de surface, dite de contact, adaptée pour être mise en contact avec le guide d'onde. Pour un guide optique formé par un film mince, la portion de contact 24 est plane.

La portion de contact 24 comporte la zone d'injection 25. Le contact entre la portion de contact 24 et le guide d'onde 10 est adapté pour assurer au niveau de la zone d'injection une continuité optique entre le corps 21 du système d'injection 20 et le guide d'onde.

Dans le mode de réalisation illustré sur la figure 1, la continuité optique entre le corps 21 du système d'injection 20 et le guide d'onde 10 est obtenue à l'aide d'une colle, non représentée, présentant le même indice optique que le guide d'onde 10 et le corps 21 du système d'injection 20. Une telle colle permet également d'assurer que le système d'injection 20 reste en place sur le guide d'onde 10.

La continuité optique peut également être obtenue, sans que l'on sorte du cadre de l'invention, par l'utilisation un additif d'interface entre le guide d'onde 10 et la surface de contact 24, l'additif présentant un indice optique sensiblement identique à celui du guide d'onde, ou par un ajustement de la surface de la portion de contact 24 et de la surface du guide optique 10 destinée à être en contact avec la portion de contact 24 ceci de manière à supprimer la couche d'air qui pourrait exister lors de l'équipement du guide optique par le système d'injection.

La continuité optique entre la portion de contact 24 et le guide d'onde 10 permet d'assurer la continuité optique entre la zone d'injection 25 et le guide d'onde 10. Ainsi, un rayonnement électromagnétique passant du système d'injection 20 au guide d'onde 10 au niveau de la zone d'injection 25 n'est pas soumis lors de ce passage à une rupture d'indice optique abrupte qui pourrait engendrer une déviation importante de la direction de propagation dudit rayonnement optique.

La zone d'injection est présente à la surface de la zone de réception et est définie comme étant la zone sur laquelle, comme l'illustre la figure 2, un rayonnement électromagnétique présentant une direction de propagation sensiblement parallèle à la direction d'injection est dévié lors de son passage dans le système d'injection 20 par la portion de surface de réception 26.

Dans le mode de réalisation illustré sur la figure 1 dans lequel le guide d'onde 10 est un film mince, la zone d'injection 25 est représentée par un segment longitudinal.

Le corps 21 du système d'injection 20 présente la portion de surface de réception 26. La portion de surface de réception 26 est adaptée pour recevoir un rayonnement électromagnétique sensiblement parallèle à la direction d'injection 27 et à dévier ledit rayonnement électromagnétique par réfraction en direction de la zone d'injection pour le faire pénétrer dans le guide d'onde 10 au niveau de la zone d'injection 25.

Une telle adaptation peut être obtenue par une courbure en chacun des points de la portion de surface de réception 26 telle qu'un rayonnement électromagnétique sensiblement parallèle à la direction d'injection 27 reçu en l'un desdits points de la portion de surface de réception 26 est dévié par réfraction en direction de la zone d'injection 25.

La portion de surface de réception 26 présente une section transversale en forme d'arc d'ellipse. Une telle section transversale passe par la zone d'injection puisque celle-ci est représentée par un segment longitudinal.

La forme de la section transversale de la portion de surface de réception 26 est définie, comme illustré sur la figure 3, par les égalités suivantes :

$$R_g = \frac{A \times n_1}{n_0 + n_1} \text{ et } R_p = (A - R_g) \times \frac{\sqrt{n_1{}^2 - n_0{}^2}}{n_0}$$

avec A une dimension caractéristique de l'ellipse qui est adaptée à la largeur du rayonnement qui est destiné à être reçu par la portion de surface de réception, $R_p$ le demi petit axe de l'ellipse, Rp le demi grand axe de l'ellipse et $n_0$ l'indice du milieu dans lequel est placé l'ensemble d'injection et le guide optique. A est, comme l'illustre la figure 3, la distance entre le point focal formant la zone focale 25 au niveau de ladite section et l'origine des axes O de l'arc d'ellipse de la portion de surface de réception 26.

Le guide d'onde 10 et le système d'injection 20 forment ensemble un dispositif de guidage d'onde.

L'ensemble d'injection 1 comporte également le miroir parabolique 30. Le miroir parabolique 30 est adapté pour rediriger selon une direction d'émission 32 au moins une partie du rayonnement électromagnétique issue d'une source lumineuse 5 placée en une zone 31, dite focale, du miroir parabolique 30. La direction d'émission du miroir parabolique 30 correspond à l'axe optique du miroir parabolique 30 et la zone focale 31 correspond au foyer du miroir parabolique 30.

Le miroir parabolique 30 peut être un miroir parabolique à symétrie axiale ou un miroir parabolique à symétrie cylindrique.

Ainsi, lorsqu'une source lumineuse 5, telle qu'une diode électroluminescente, est disposée au niveau de la zone focale 31, l'ensemble du rayonnement électromagnétique est, comme illustré sur la figure 2, réfléchi selon la direction d'émission 32.

Le miroir parabolique 30 forme un dispositif optique adapté pour rediriger selon une direction d'émission 32 au moins une partie du rayonnement électromagnétique issue d'une source lumineuse 5 placée au niveau de la zone focale 31 du miroir parabolique 30.

Lors de l'installation de l'ensemble d'injection 1 sur un guide optique 10 selon la configuration illustrée sur la figure 1, le système d'injection 20 est installé en contact avec le guide d'onde 10 de manière à avoir sa zone d'injection 25 en continuité optique avec le guide d'onde 10. Le miroir parabolique 30 est placé par rapport au système d'injection 20 de manière à ce que la direction d'émission 32 corresponde sensiblement à la direction d'injection 27, et à ce que la majeure partie du rayonnement électromagnétique redirigée par le miroir parabolique 30 soit reçue par la portion de surface de réception 26.

Ainsi si une source lumineuse 5 est placée, comme illustré sur la figure 2, au niveau de la zone focale 31 du miroir parabolique 30, la majeure partie du rayonnement électromagnétique est réfléchie par le miroir parabolique 30 en direction de la portion de surface de réception 26 avec une direction sensiblement parallèle à la direction d'émission 32. Le rayonnement électromagnétique ainsi réfléchi est ensuite dévié lors de son passage dans le corps 21 du système d'injection 20 en direction de la zone d'injection 25. Le rayonnement pénètre ensuite, au niveau de la zone d'injection 25 sans être dévié, en raison de la continuité optique entre le système d'injection 20 et le guide d'onde 10, dans le guide d'onde 10. Une fois dans le guide d'onde 10, le rayonnement peut être guidé par le guide d'onde à sa destination, c'est-à-dire, dans le cas d'un écran rétro-éclairé, au niveau de la dalle de cristaux liquides.

Concernant les dimensions de l'ensemble d'injection 1, pour un film mince d'une épaisseur de 1 mm, un système d'injection 20 dont l'arc d'ellipse est défini par un demi petit axe et un demi grand axe de respectivement 35,77 mm et 48 mm est particulièrement adapté. Pour de telles caractéristiques de la portion de surface de réception 26, le corps 21 doit présenter une largeur d'au moins 80 mm avec une longueur qui est adaptée à la largeur du côté du film mince qu'il équipe. En ce qui concerne le miroir parabolique 30, il présente une hauteur compatible avec le demi petit axe de la portion de surface de réception 26, c'est-à-dire 35,77 mm.

La figure 4 illustre un ensemble d'injection 1 selon le premier mode de réalisation équipant le guide d'onde 10 au niveau d'un autre emplacement du guide d'onde 10 que celui de l'une des extrémités dudit guide d'onde 10.

Un tel équipement du guide d'onde 10 par l'ensemble d'injection 1 se différencie d'un équipement tel qu'illustré sur la figure 1 de par l'emplacement du système d'injection 20 sur le guide d'onde 10, celui-ci étant placé en contact avec la surface du guide d'onde 10 à distance de chacune des extrémités du guide d'onde 10. De même, avec un tel équipement du guide d'onde 10 la source lumineuse 5 et le miroir parabolique 30 sont placés au-dessus de la surface du guide d'onde 10, la direction d'émission 32 étant orientée en direction de la portion de surface 26.

Avec un tel équipement du guide d'onde 10 le système d'injection 20 est installé sur le guide d'onde 10 de manière à présenter une direction d'injection 27 sensiblement parallèle au plan du guide d'onde 10, la direction d'injection 27 correspondant à l'une des directions principales de guidage du guide d'onde 10.

Un tel système d'injection 20 fonctionne selon un principe identique à celui illustré sur la figure 2 et permet l'injection de lumière dans le guide d'onde 10 avec injection du rayonnement électromagnétique au niveau de l'emplacement du système d'injection 20 sur le guide d'onde 10.

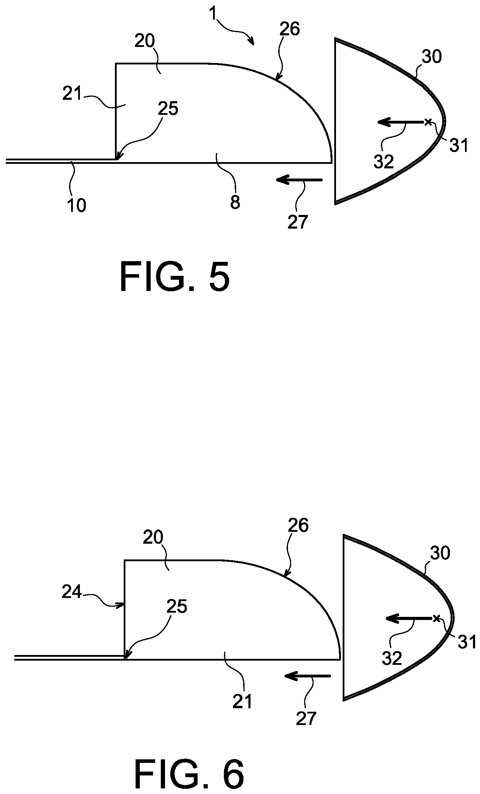

Selon un deuxième mode de réalisation de l'ensemble d'injection illustré sur la figure 5, le système d'injection 20 peut être adapté pour être disposé en contact avec l'extrémité du guide optique 10 avec sa zone d'injection 25 en continuité optique avec l'extrémité du guide optique 10.

Un ensemble d'injection 1 selon ce deuxième mode de réalisation se différencie d'un ensemble d'injection 1 selon le premier mode de réalisation en ce que la surface de contact 24 et la zone d'injection 25 sont positionnées dans le corps 21 du système d'injection 21 de manière à ce que la surface de contact 25 et la zone d'injection 26 sont en contact avec l'extrémité du guide d'onde 10 lorsque le système d'injection 20 est positionné dans le prolongement du guide d'onde 10, comme cela est illustré sur la figure 5.

La configuration du miroir parabolique 30 vis-à-vis du système d'injection 1 est identique pour un ensemble d'injection 1 selon ce deuxième mode de réalisation à la configuration décrite pour le premier mode de réalisation. De même le principe de fonctionnement reste identique.

On peut néanmoins noter que les dimensions données en exemple dans le premier mode de réalisation ne sont pas directement transposables à ce deuxième mode de réalisation celles-ci devant être adaptées pour positionner la zone d'injection de façon adéquate.

La figure 6 illustre un troisième mode de réalisation dans lequel l'ensemble d'injection comprend un dispositif de guidage comportant un composant 8 dont une première partie forme un guide d'onde et une seconde partie forme un système d'injection du même type que celui du premier mode de réalisation.

Un ensemble d'injection 1 selon ce troisième mode de réalisation se différencie d'un ensemble selon le premier mode de réalisation en ce qu'il comporte un guide d'onde 10 formant une première partie d'un composant 8 et en ce que le système d'injection 20 en formant une deuxième partie dudit composant 8, constitue avec le guide d'onde 10 le composant 8.

La première partie du composant 8 reprend l'essentiel des caractéristiques d'un guide d'onde 10 tel que décrit dans le premier mode réalisation et la deuxième partie reprend l'essentiel des caractéristiques d'un système d'injection 20 selon premier mode de réalisation. La première et la deuxième partie sont liées l'une à l'autre au niveau de la zone de d'injection 25 de la deuxième partie.

Ainsi, selon un principe identique à celui d'un ensemble d'injection 1 selon le premier mode de réalisation, un rayonnement électromagnétique dont la direction est sensiblement parallèle à la direction d'injection 27 lorsqu'il est reçu par la portion de surface de réception 26 est dévié en direction de la zone d'injection 25 et est injecté dans la deuxième partie du composant.

Dans ce troisième mode de réalisation la continuité optique entre la première et la deuxième partie au niveau de la zone d'injection est direct puisse que ces deux parties forment un monobloc et sont liées l'une à l'autre par la zone d'injection.

Selon un quatrième mode de réalisation non illustré, l'ensemble d'injection 1 peut comporter un système d'injection 20 dont la zone d'injection 25 est sensiblement ponctuelle et l'ensemble des sections passant par ladite zone d'injection 25 présente une forme en arc d'ellipse.

Un ensemble d'injection 1 selon ce quatrième mode de réalisation se différencie du premier mode de réalisation en ce que le corps 21 du système d'injection 20 présente une portion de surface de réception 26 dont l'ensemble des sections selon la direction d'injection 27 passant par la zone focale 25 présente une forme en arc d'ellipse selon les deux égalités décrite dans le premier mode, la valeur A étant identique pour l'ensemble de ces sections.

Le corps 21 d'un tel système d'injection 20 est délimité par un quart d'ellipsoïde prolongé en direction du guide d'onde 10. On entend ici, par quart d'ellipsoïde une partie d'ellipsoïde délimitée par deux plans perpendiculaires entre eux et passant chacun par deux axes de l'ellipsoïde.

Le principe de fonctionnement d'un ensemble d'injection selon ce quatrième mode de réalisation est identique à celui d'un ensemble d'injection 20 selon le premier mode réalisation.

Selon un cinquième mode de réalisation non illustré sur les figures, l'ensemble d'injection 1 peut comporter un système d'injection 20 dont la portion de surface peut présenter des sections dont la forme est autre que celle d'un arc d'ellipse comme par exemple celle d'un arc de cercle.

Un système d'injection 20 selon ce cinquième mode de réalisation se différencie d'un système d'injection 20 selon le premier mode de réalisation en ce que sa portion de surface de réception 26 présente des sections dont la forme est différente de celle d'un arc d'ellipse, et en ce que la zone d'injection 25 est une surface d'injection le long de laquelle l'injection du rayonnement électromagnétique à lieu.

Dans ce mode de réalisation, l'injection à lieu sur une zone d'injection 25 qui occupe une partie de la portion de contact 24 du corps 21.

Si dans l'ensemble des modes de réalisation décrits ci-dessus le système d'injection 20 est adapté pour équiper un guide optique 10 dont la forme est celle d'un film mince, le système d'injection 20 peut être adapté pour équiper un guide d'onde 10 présentant une autre forme que celle d'un film mince, comme celle, par exemple d'une fibre optique. Ainsi, le système d'injection 20 peut présenter un corps de révolution présentant un passage central pour le passage d'un guide d'onde 10 en forme de fibre optique, ceci sans que l'on sorte du cadre de l'invention.

De même, si dans l'ensemble des modes de réalisation décrits ci-dessus, l'ensemble d'injection 1 comporte un seul système d'injection 20 en contact avec le guide d'onde sur une de ces faces, il est envisageable, sans que l'on sorte du cadre de l'invention que l'ensemble d'injection 1 comporte deux systèmes d'injection 20, voire plus. Ainsi, dans une configuration double, chacun des systèmes d'injection 10 équipant une face du guide d'onde, la surface de réception du rayonnement électromagnétique est pratiquement doublée par rapport à un guide d'onde 10 équipé d'un seul système d'injection 20.

Dans l'ensemble des modes de réalisation décrits ci-dessus, le dispositif optique est un miroir parabolique 30. Néanmoins, il est envisageable, sans que l'on sorte du cadre de l'invention, que le dispositif optique mis en oeuvre pour rediriger une partie du rayonnement électromagnétique issu de la source lumineuse soit un dispositif autre qu'un miroir parabolique 30. Ainsi, le dispositif optique peut être une lentille convergente, la source lumineuse étant placée au niveau du foyer de la lentille, ou être une combinaison de dioptres optiques et de miroirs adaptés pour obtenir une redirection d'une partie du rayonnement électromagnétique issu de la source lumineuse, ceci conformément à l'invention.

Dans l'ensemble des modes de réalisation décrits ci-dessus la portion de surface 26 présente des sections en forme d'arc d'ellipse. Ces mêmes sections peuvent, sans que l'on sorte du cadre de l'invention, également présenter d'autres formes que celles en arc d'ellipse si ces dernières sont adaptées pour qu'un rayonnement électromagnétique sensiblement parallèle à la direction d'injection 27 reçu en l'un des points de l'une de ces sections soit dévié par réfraction en direction de la zone d'injection 25. Ainsi la portion de surface 26 peut présenter, par exemple, des sections en arc de cercle, la zone d'injection 25 n'étant pas, selon cette possibilité, ponctuelle mais une surface d'injection.

**Revendications**

1. Dispositif de guidage d'onde comportant :

   - un guide d'onde (10) présentant une direction principale de guidage (11), et
   - un système d'injection (20) de lumière adapté pour injecter un rayonnement électromagnétique dans le guide d'onde (10) au niveau d'un emplacement dudit guide d'onde (10), le dispositif de guidage d'onde **étant caractérisé en ce que** le système d'injection (20) comporte une portion de surface (26) dite de réception adaptée pour recevoir un rayonnement électromagnétique sensiblement parallèle à la direction principale de guidage (11) et pour dévier ledit rayonnement électromagnétique par réfraction en direction d'une zone dite d'injection (25) du système d'injection qui est en continuité optique avec le guide d'onde ceci pour faire pénétrer le rayonnement électromagnétique dans le guide d'onde (10) au niveau de ladite zone d'injection (25),

   et dans lequel la zone d'injection (25) présente une dimension faible vis-à-vis de celle de la portion de surface de réception (26).

2. Dispositif de guidage d'onde selon la revendication 1, dans lequel le système d'injection (20) comporte un corps (21) transparent dont l'indice optique $n_1$ est sensiblement identique à celui du guide d'onde (10).

3. Dispositif de guidage d'onde selon la revendication 2, dans lequel le corps (21) présente la portion de surface de réception (26), ladite portion de surface de réception (26) présentant en chacun de ses points une courbure de surface telle qu'un rayonnement électromagnétique sensiblement parallèle à la direction de guidage (11) reçu en l'un desdits points de la portion de surface de réception (26) est dévié par réfraction en direction de la zone d'injection (25).

4. Dispositif de guidage d'onde selon la revendication 3, dans lequel au moins une section de la portion de surface de réception (26), passant par la zone d'injection (25) et selon la direction principale de guidage (27), présente une forme en arc d'ellipse.

5. Dispositif de guidage d'onde selon la revendication 4, dans lequel chacune des sections de la portion de surface de réception (26), passant par la zone d'injection (25) et selon la direction principale de guidage (27), présente une forme en arc d'ellipse.

6. Dispositif de guidage d'onde selon la revendication 4 ou 5, dans lequel le système d'injection (20) est destiné à recevoir le rayonnement électromagnétique sur sa portion de surface de réception (26) à partir d'un milieu présentant un indice optique d'origine $n_0$ et dans lequel les points de chacune des section de la portion de surface de réception (26) présentant une forme en arc d'ellipse sont sensiblement selon une ellipse dont le centre est un point de la zone d'injection (25) et dont le demi grand axe et le demi petit axe Rg, $R_p$ sont respectivement définis par les égalités

suivantes: $R_g = \dfrac{A \times n_1}{n_0 + n_1}$ et $R_p = (A - R_g) \times \dfrac{\sqrt{n_1^2 - n_0^2}}{n_0}$ avec A une dimension caractéristique de l'ellipse qui est adaptée à la largeur du rayonnement qui est destinée à être reçu par la portion de surface de réception (26).

7. Dispositif de guidage d'onde selon l'une quelconque des revendications précédentes, dans lequel le système d'injection (20) est un dispositif distinct du guide d'onde (10), ledit système d'injection (20) étant en contact optique avec le guide d'onde (10) par sa zone d'injection (25).

8. Dispositif de guidage d'onde selon l'une quelconque des revendications 1 à 6 constitué par un composant (8) dont une première partie (10) forme un guide d'onde et au moins une deuxième partie (20) forme le système d'injection, la première partie (10) et la deuxième partie (20) étant en continuité optique l'une avec l'autre au niveau de la zone de la deuxième partie (20) formant zone d'injection (25).

9. Ensemble d'injection (1) de lumière dans un guide optique (10) adapté pour injecter un rayonnement électromagnétique dans le guide d'onde (10) au niveau d'un emplacement dudit guide d'onde (10) et guide d'onde (10), l'ensemble d'injection (1) **étant caractérisé en ce qu'**il comporte :

- un dispositif optique adapté pour rediriger selon une direction d'émission (32) au moins une partie du rayonnement électromagnétique issue d'une source lumineuse (5) placée en une zone (31), dite focale, du dispositif optique,
- un dispositif de guidage d'onde selon l'une quelconque des revendications 1 à 8,

le dispositif optique (20) étant positionné par rapport au système d'injection de manière à ce que la direction d'émission (32) soit sensiblement parallèle à la direction de guidage (11) et à ce qu'au moins une partie d'un rayonnement électromagnétique émis à partir de la zone focale (31) soit redirigée par le dispositif optique sur la portion de surface de réception (26) du système d'injection (20).

10. Ensemble d'injection (1) de lumière selon la revendication 9 dans lequel le dispositif optique est un miroir.

11. Ensemble d'injection (1) de lumière selon la revendication 10, dans lequel le miroir est un miroir parabolique, la zone focale (31) étant le foyer du miroir parabolique (30) et la direction d'émission (32) étant sensiblement parallèle à l'axe optique du miroir parabolique (30).

**Patentansprüche**

1. Wellenleitvorrichtung, umfassend:

- einen Wellenleiter (10), der eine Hauptleitrichtung (11) aufweist, und
- ein Lichtinjektionssystem (20) zum Injizieren einer elektromagnetischen Strahlung in den Wellenleiter (10) im Bereich einer Stelle des Wellenleiters (10), wobei die Wellenleitvorrichtung **dadurch gekennzeichnet ist, dass** das Injektionssystem (20) einen sogenannten Empfangsoberflächenbereich (26) umfasst, der dazu ausgelegt ist, eine elektromagnetische Strahlung im Wesentlichen parallel zur Hauptleitrichtung (11) zu empfangen, und die elektromagnetische Strahlung durch Brechung in Richtung einer sogenannten Injektionszone (25) des Injektionssystems in optischer Verlängerung des Wellenleiters abzulenken, um die elektromagnetische Strahlung im Bereich der Injektionszone (25) in den Wellenleiter (10) eindringen zu lassen,

und wobei die Injektionszone (25) eine kleine Abmessung verglichen mit jener des Empfangsoberflächenbereichs (26) aufweist.

2. Wellenleitvorrichtung nach Anspruch 1, wobei das Injektionssystem (20) ein transparentes Gehäuse (21) umfasst, dessen optischer Index $n_1$ im Wesentlichen identisch zu jenem des Wellenleiters (10) ist.

3. Wellenleitvorrichtung nach Anspruch 2, wobei das Gehäuse (21) den Empfangsoberflächenbereich (26) aufweist, wobei der Empfangsoberflächenbereich (26) an jedem seiner Punkte eine Oberflächenkrümmung derart aufweist, dass eine elektromagnetische Strahlung im Wesentlichen parallel zur Leitrichtung (11), die an einem der Punkte des Empfangsoberflächenbereichs (26) empfangen wird, durch Brechung in Richtung der Injektionszone (25) abgelenkt wird.

4. Wellenleitvorrichtung nach Anspruch 3, wobei wenigstens ein Abschnitt des Empfangsoberflächenbereichs (26), der durch die Injektionszone (25) und entlang der Hauptleitrichtung (27) verläuft, eine elliptische Bogenform aufweist.

5. Wellenleitvorrichtung nach Anspruch 4, wobei jeder der Abschnitte des Empfangsoberflächenbereichs (26), der durch die Injektionszone (25) und entlang der Hauptleitrichtung (27) verläuft, eine elliptische Bogenform aufweist.

6. Wellenleitvorrichtung nach Anspruch 4 oder 5, wobei das Injektionssystem (20) dazu ausgelegt ist, die elektromagnetische Strahlung an seinem Empfangsoberflächenbereich (26) ausgehend von einem Medium zu empfangen, das einen optischen Ursprungsindex $n_0$ aufweist, und wobei die Punkte jedes der Abschnitte des Empfangsoberflächenbereichs (26), die eine elliptische Bogenform aufweisen, im Wesentlichen entlang einer Ellipse sind, deren Zentrum ein Punkt der Injektionszone (25) ist, und deren große Halbachse und kleine Halbachse $R_g$, $R_p$ durch die folgenden jeweiligen Gleichungen definiert sind:

$$R_g = \frac{A \times n_1}{n_0 + n_1} \text{ und } R_p = (A - R_g) \times \frac{\sqrt{n_1^2 - n_o^2}}{n_0},$$

wobei A eine charakteristische Abmessung der Ellipse ist, die an die Breite der Strahlung angepasst ist, die durch den Empfangsoberflächenbereich (26) empfangen werden soll.

7. Wellenleitvorrichtung nach einem der vorhergehenden Ansprüche, wobei das Injektionssystem (20) eine vom Wellenleiter (10) verschiedene Vorrichtung ist, wobei das Injektionssystem (20) mit dem Wellenleiter (10) durch seine Injektionszone (25) in Kontakt ist.

8. Wellenleitvorrichtung nach einem der Ansprüche 1 bis 6, gebildet mit einer Komponente (8), von der ein erster Teil (10) einen Wellenleiter bildet, und von der wenigstens ein zweiter Teil (20) das Injektionssystem bildet, wobei der erste Teil (10) und der zweite Teil (20) in optischer Verlängerung zueinander im Bereich der Zone des zweiten Teils (20) sind, die die Injektionszone (25) bildet.

9. Anordnung (1) zur Injektion von Licht in einen Wellenleiter (10), die dazu ausgelegt ist, eine elektromagnetische Strahlung in den Wellenleiter (10) im Bereich einer Stelle des Wellenleiters (10) zu injizieren, und Wellenleiter (10), wobei die Injektionsanordnung (1) **dadurch gekennzeichnet ist, dass** sie umfasst:

   - eine optische Vorrichtung, die dazu ausgelegt ist, wenigstens einen Teil der elektromagnetischen Strahlung in eine Emissionsrichtung (32) umzulenken, die aus einer Lichtquelle (5) stammt, die in einer sogenannten Fokuszone (31) der optischen Vorrichtung platziert ist,
   - eine Wellenleitvorrichtung nach einem der Ansprüche 1 bis 8,

wobei die optische Vorrichtung (20) bezüglich des Injektionssystems derart positioniert ist, dass die Emissionsrichtung (32) im Wesentlichen parallel zur Leitrichtung (11) ist, und dass wenigstens ein Teil einer elektromagnetischen Strahlung, die ausgehend von der Fokuszone (31) emittiert wird, durch die optische Vorrichtung auf den Empfangsoberflächenbereich (26) des Injektionssystems (20) umgelenkt wird.

10. Lichtinjektionsanordnung (1) nach Anspruch 9, wobei die optische Vorrichtung ein Spiegel ist.

11. Lichtinjektionsanordnung (1) nach Anspruch 10, wobei der Spiegel ein Parabolspiegel ist, wobei die Fokuszone (31) der Brennpunkt des Parabolspiegels (30) ist, und wobei die Emissionsrichtung (32) im Wesentlichen parallel zur optischen Achse des Parabolspiegels (30) ist.

**Claims**

1. Wave-guidance device comprising:

   - a waveguide (10) having a main guidance direction (11), and
   - a light-ejection system (20) suitable for injecting electromagnetic radiation into the waveguide (10) at a location of said waveguide (10), the wave-guidance device being **characterised in that** the injection system (20) comprises a so-called reception surface portion (26) suitable for receiving electromagnetic radiation substantially parallel to the main guidance direction (11) and for diverting said electromagnetic radiation by refraction in the direction of a so-called injection zone (25) of the injection system that is in optical continuity with the waveguide, in order to make the electromagnetic radiation enter the waveguide (10) at said injection zone (25),

   and in which the injection zone (25) has a small size vis-à-vis that of the reception surface portion (26).

2. Wave-guidance device according to claim 1, in which the injection system (20) comprises a transparent body (21) the optical index $n_1$ of which is substantially identical to that of the waveguide (10).

3. Wave-guidance device according to claim 2, in which the body (21) has the reception surface portion (26), said reception surface portion (26) having at each of its points a surface curvature such that electromagnetic radiation substantially parallel to the guidance direction (11) received at one of said points of the reception surface portion (26) is diverted by refraction in the direction of the injection zone (25).

4. Wave-guidance device according to claim 3, in which at least one section of the reception surface portion (26), passing through the injection zone (25) and in the main guidance direction (27), has a shape in an arc of an ellipse.

5. Wave-guidance device according to claim 4, in which each of the sections of the reception surface portion (26), passing through the injection zone (25) and in the main guidance direction (27), has a shape in an arc of an ellipse.

6. Wave-guidance device according to claim 4 or claim 5, in which the injection system (20) is intended to receive the electromagnetic radiation on its reception surface portion (26) from a medium having an original optical index $n_0$ and in which the points of each of the sections of the reception surface portion (26) having a shape in an arc of an ellipse are substantially in an ellipse the centre of which is a point of the injection zone (25) and the half major axis and the half minor axis $R_g$, $R_p$ of which are respectively defined by the following equalities:

$$R_g = \frac{A \, x \, n_I}{n_0 + n_I} \; \text{ and } R_p = \left(A - R_g\right) x \; \frac{\sqrt{n_1{}^2 - n_0{}^2}}{n_0}$$

   with A a characteristic dimension of the ellipse that is suited to the width of the radiation that is intended to be received by the reception surface portion (26).

7. Wave-guidance device according to any of the preceding claims, in which the injection system (20) is a device distinct from the waveguide (10), said injection system (20) being in optical contact with the waveguide (10) through its injection zone (25).

8. Wave-guidance device according to any of claims 1 to 6, consisting of a component (8) a first part (10) of which forms a waveguide and at least one second part (20) of which forms the injection system, the first part (10) and the second part (20) being in optical continuity with each other at the region of the second part (20) forming the injection zone (25).

9. Assembly (1) for injecting light into an optical guide (10) suitable for injecting electromagnetic radiation into the waveguide (10) at a location of said waveguide (10), and waveguide (10), the injection assembly (1) being **characterised in that** it comprises:

   - an optical device suitable for redirecting, in an emission direction (32), at least part of the electromagnetic radiation issuing from a light source (5) placed in a so-called focal zone (31) of the optical device,
   - a wave-guidance device according to any of claims 1 to 8,

EP 2 828 694 B1

the optical device (20) being positioned with respect to the injection system so that the emission direction (32) is substantially parallel to the guidance direction (11) and so that at least part of an electromagnetic radiation emitted from the focal zone (31) is redirected by the optical device onto the reception surface portion (26) of the injection system (20).

10. Light-injection assembly (1) according to claim 9, in which the optical device is a mirror.

11. Light-injection assembly (1) according to claim 10, in which the mirror is a parabolic mirror, the focal zone (31) being the focus of the parabolic mirror (30) and the emission direction (32) being substantially parallel to the optical axis of the parabolic mirror (30).

# FIG. 1

# FIG. 2

FIG. 3

FIG. 4

FIG. 5

FIG. 6

**EP 2 828 694 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060062016 A